# FASCICULE DE BREVET EUROPEEN

(11) **EP 0 581 627 B1**
(45) Date de publication et mention de la délivrance du brevet: **29.01.1997**
(21) Numéro de dépôt: 93401701.3
(22) Date de dépôt: 30.06.1993
(51) Int. Cl.: B62D 27/02, F16B 37/06

(54) **Procédé de fixation d'un essieu de véhicule sur le soubassement de la caisse de ce véhicule**
Verfahren zur Befestigung einer Fahrzeugachse am Rahmen eines Fahrzeugs
Method to fix a vehicle axle onto the base of the bodywork of said vehicle

(30) Priorité: 30.07.1992 FR 9209476
(43) Date de publication de la demande: 02.02.1994
(73) Titulaire: AUTOMOBILES PEUGEOT, 75116 Paris (FR); AUTOMOBILES CITROEN, 92200 Neuilly-sur-Seine (FR)
(72) Inventeur: Mykieta, Yaroslaw, F-92320 Les Pavillons-Sous-Bois (FR)
(74) Mandataire: Durand, Yves Armand Louis

(56) Documents cités:
- EP-A- 0 390 751
- DE-A- 4 019 796
- DE-A- 4 039 812
- DE-C- 3 927 924
- GB-A- 796 442
- PATENT ABSTRACTS OF JAPAN vol. 16, no. 83 (M-1216)28 Février 1992 & JP-A-03 267 471 (MISAWA HOMES CO LTD.) 28 Novembre 1991
- PATENT ABSTRACTS OF JAPAN vol. 12, no. 39 (M-665)5 Février 1988 & JP-A-62 191 274 (NISSAN MOTOR CO LTD.) 21 Août 1987

## Description

La présente invention a essentiellement pour objet un procédé de fixation d'un essieu de véhicule sur le soubassement de la caisse de ce véhicule.

Elle vise également un assemblage obtenu par ce procédé.

Il a déjà été proposé de fixer des essieux sur le soubassement de la caisse d'un véhicule au moyen de vis et d'écrou (voir document DE-A-4.039.812).

Jusqu'à présent, les écrous étaient maintenus dans les corps creux (longerons, brancards, etc...) formant le soubassement, par des cages dans lesquelles l'écrou est monté flottant, ce qui autorise un débattement important pour absorber les dispersions de cotes dues aux phases successives d'assemblage du soubassement.

Mais, la fixation par écrous encagés nécessite la présence de trous de passage des vis qui soient suffisamment grands pour permettre aux vis un débattement afin de retrouver les écrous correspondants. Autrement dit, il faut que les trous soient agrandis, ce qui présente l'inconvénient de nuire à la qualité de la fixation et à la géométrie de l'ensemble essieu-caisse.

Par ailleurs, on connaît d'après le document JP-A-3.267.471 un système pour fixer un élément de construction tel qu'un panneau sur une poutre, lequel système utilise une embase avec une pluralité de tiges qui peuvent traverser une pluralité d'orifices ménagés dans la poutre et ayant un diamètre correspondant à celui des tiges, et sur lesquelles tiges sont enfilés des écrous qui sont ensuite soudés sur la poutre au niveau des orifices, après quoi l'embase avec ses tiges est retirée de la poutre et le panneau est fixé sur cette poutre.

La présente invention a pour but de proposer un procédé de fixation d'un essieu de véhicule sur un soubassement de caisse, permettant d'obtenir un assemblage parfait tant sur le plan de la rigidité que sur celui de la qualité de la géométrie de l'assemblage, et cela grâce à une très grande précision géométrique de la position des écrous de fixation.

A cet effet, l'invention a pour objet un procédé de fixation d'un essieu de véhicule sur le soubassement de la caisse de ce véhicule qui consiste, après avoir assemblé le soubassement,
a) à préparer un gabarit comportant des pions de centrage dont la position relative est identique à celle des emplacements de vis prévus sur l'essieu ;
b) à positionner des écrous sur le soubassement à l'aide du gabarit ;
c) à fixer les écrous aux emplacements déterminés à l'étape b), le gabarit étant toujours en place ;
d) à retirer le gabarit ; et
e) à positionner l'essieu sur le soubassement pour le fixer ensuite à l'aide de vis.

La fixation des écrous, comme décrit à l'étape c) ci-dessus, est avantageusement effectuée par soudage.

Ce procédé est encore caractérisé en ce que l'étape b) est effectuée en plaçant les écrous, qui comportent chacun une embase, sur les pions de centrage du gabarit, puis en appliquant le gabarit contre le soubassement de manière que les écrous passent au travers d'un élément de celui-ci et soient plaqués par leur embase sur ledit soubassement.

Suivant un autre mode de réalisation, l'étape b) est effectuée en mettant d'abord en place le gabarit par rapport au soubassement, les pions du gabarit pénétrant dans un orifice ménagé dans la tôle, et les écrous étant ensuite positionnés à l'intérieur du soubassement par les pions du gabarit.

L'étape c) est effectuée en soudant les écrous par leur embase sur le soubassement.

Le corps d'écrou présente une forme générale extérieure conique s'évasant depuis le trou taraudé de l'écrou vers un chambrage qui le prolonge.

Selon encore un autre mode de réalisation, les écrous étant fixés, par exemple soudés, sur une tôle épaisse, l'étape b) est effectuée en introduisant les pions de centrage du gabarit dans les chambrages des écrous et l'étape c) est effectuée en fixant ladite tôle sur le soubassement.

Dans ce cas, les écrous présentent une forme cylindrique et sont fixés par leur partie formant chambrage au droit d'un orifice ménagé dans la tôle.

Mais d'autres caractéristiques et avantages de l'invention apparaîtront mieux dans la description détaillée qui suit et se réfère aux dessins annexés, donnés uniquement à titre d'exemple, et dans lesquels:
La figure 1 est une vue schématique et en coupe d'un élément de soubassement d'un véhicule sur lequel est fixé un écrou selon l'invention ;
La figure 2 est une vue similaire à la figure 1, mais illustrant comment s'effectue le positionnement de l'écrou avant soudage;
La figure 3 est une vue analogue à la figure 1, mais illustrant une autre manière de fixer l'écrou sur un élément de soubassement différent en structure de celui montré sur la figure 1 ;
La figure 4 illustre schématiquement et en coupe un autre mode de réalisation d'écrou fixé sur le soubassement par l'intermédiaire d'une tôle ou analogue.

Sur les figures, on a montré d'une manière générale en 1 une partie du soubassement de la caisse d'un véhicule automobile, lequel soubassement se compose d'un certain nombre d'éléments qui sont assemblés et parmi lesquels il faut citer les longerons et les brancards.

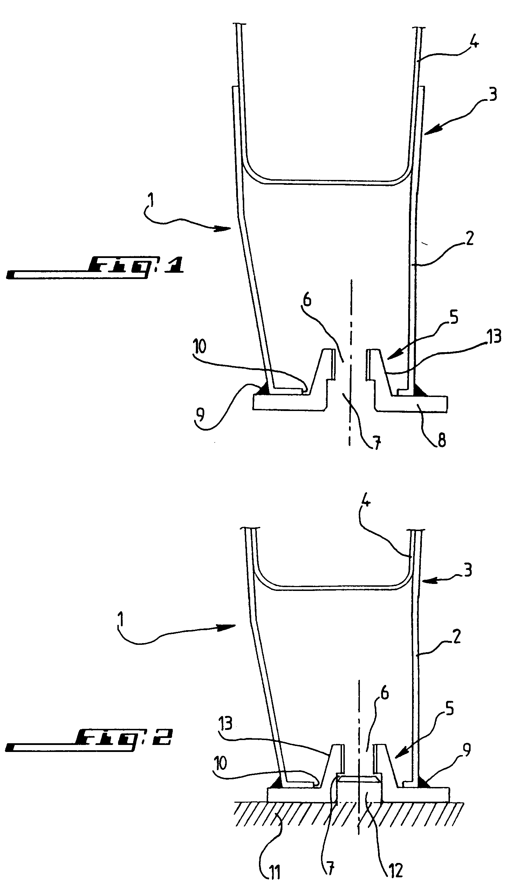

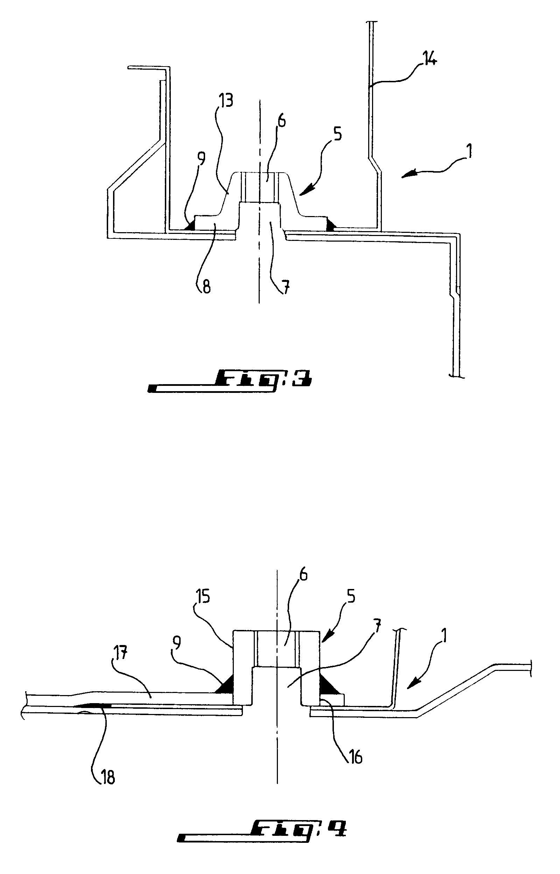

C'est ainsi que, sur les figures 1 et 2, on voit en 2 un brancard fixé en 3 à un autre élément 4 du soubassement 1.

Sur le soubassement 1, et conformément à l'invention, sont fixés positivement des écrous 5 de la manière décrite ci-après.

Suivant le mode de réalisation illustré par les figures 1 et 2, l'écrou 5 comporte un fût taraudé 6 prolongé par un chambrage 7 de diamètre supérieur à celui du trou taraudé 6. L'écrou 5 comporte en outre une embase 8 située au niveau de la partie du corps d'écrou formant chambrage 7.

L'écrou 5 est fixé, par soudure 9 par exemple, sur le brancard 2, et ce par l'intermédiaire de l'embase 8 qui présente une forme quelconque telle que par exemple rectangulaire ou circulaire. Ainsi, comme on le voit bien sur les figures 1 et 2, le trou taraudé 6 de l'écrou 5 traverse une ouverture 10 du brancard 2 et se situe par conséquent à l'intérieur dudit brancard, tandis que le chambrage 7 débouche vers l'extérieur du brancard, c'est-à-dire du côté de l'essieu (non représenté sur les dessins) à fixer sur le soubassement 1.

On a montré en 11 sur la figure 2 un gabarit comportant des pions de centrage 12 susceptibles de pénétrer dans le chambrage 7 de l'écrou 5, et cela pour permettre la mise en place et la fixation de l'écrou 5, comme on l'expliquera en détail plus loin.

On observera ici que l'écrou 5 représenté sur les figures 1 et 2 présente une forme générale extérieure conique 13 allant en s'évasant depuis le trou taraudé 6 vers le chambrage 7.

Dans le mode de réalisation illustré sur la figure 3, l'écrou 5 possède une structure et une forme identiques à celui décrit précédemment. Mais ici, l'embase 8 de l'écrou 5 est fixée par soudage 9 à l'intérieur de l'élément 14 du soubassement 1, alors que, dans la réalisation des figures 1 et 2, l'embase 8 est fixée sur l'extrémité extérieure du brancard 2 et fait en quelque sorte saillie de ladite extrémité extérieure.

Dans la variante représentée sur la figure 4, l'écrou 5 comporte toujours un trou taraudé 6 et un chambrage 7 de diamètre supérieur à celui du trou taraudé 6, mais il ne comporte pas d'embase intégrale 8, et présente une forme extérieure cylindrique 15.

Plus précisément, l'écrou 5 est ici fixé, par exemple soudé 9, par sa partie formant chambrage 7 au droit d'un orifice 16 ménagé dans une tôle 17 elle-même soudée en 18 par exemple sur le soubassement 1.Le plus souvent, on peut se contenter de quelques points de soudure, comme pour l'écrou de la figure 3.

Mais, pour une meilleure compréhension de l'invention, on expliquera ci-après comment s'effectue la fixation des écrous 5 sur le soubassement 1, et ce en référence aux figures 1 et 2.

On observera tout d'abord que les écrous 5 doivent être fixés sur le soubassement déjà assemblé, afin que les imprécisions de réalisation et d'assemblage des pièces de détail n'aient pas d'influence sur le positionnement de ces écrous.

Les écrous 5 à fixer sur le soubassement 1 sont placés sur les pions de centrage 12 d'un gabarit tel que 11 et dont la position correspond exactement à celle des vis prévues sur l'essieu (non représenté) à assembler avec le soubassement.

Ensuite, le gabarit 11 est appliqué contre le soubassement de manière que les écrous 5 passent au travers d'un élément de celui-ci, comme on le voit sur les figures 1 et 2, et soient plaqués par leur embase 8 sur le soubassement.

Les écrous 5 sont alors soudés par leur embase 8 sur le soubassement 1 et cela en des emplacements précis déterminés par les pions 12 du gabarit 11 et correspondant à l'emplacement des vis (non représentées) sur l'essieu.

Après soudage, le gabarit 11 est retiré, et il suffit de positionner l'essieu sur le soubassement 1 pour le fixer ensuite à l'aide des vis.

Pour ce qui concerne le mode de réalisation de la figure 3, on procède de la même façon que précédemment sauf qu'ici l'écrou 5 sera positionné avec précision par les pions 12 du gabarit 11 après mise en place du gabarit par rapport au soubassement, les pions 12 pénétrant dans l'orifice ménagé dans la tôle. On procèdera ensuite au soudage de l'écrou 5, le gabarit restant en place.

Enfin, pour ce qui est du mode de réalisation de la figure 4, l'écrou 5 sera soudé sur la tôle épaisse 17, et cette dernière sera soudée à son tour sur le soubassement 1 après utilisation du gabarit 11, c'est-à-dire après introduction des pions de centrage 12 dans les chambrages 7 des écrous 5 déjà soudés à la tôle 17.

En bref, on comprend de ce qui prècède que la fixation définitive des écrous 5 sur le soubassement 1 est nécessairement effectuée après positionnement correct par rapport à la caisse du véhicule.

On ajoutera encore ici que la hauteur de l'écrou se trouve augmentée par la présence du chambrage 7, ce qui permet de bénéficier d'une augmentation de l'élasticité de la vis par augmentation de sa longueur, et donc d'une meilleure fiabilité de serrage.

La position précise des écrous permet, comme on le comprend, de réduire la dimension des trous de passage des vis et ainsi d'améliorer les portées des assemblages. De plus, en cas de démontage des essieux, ceux-ci sont facilement, précisément et correctement repositionnés par rapport à la caisse du véhicule, directement par les vis de fixation, sans l'utilisation du gabarit de montage.

Par ailleurs, en cas de détérioration du filetage des écrous, ceux-ci peuvent être réparés facilement en pratiquant un taraudage, car, étant soudés à la caisse du véhicule, et donc maintenus, ils peuvent être facilement retaraudés in situ.

Bien entendu, l'invention n'est nullement limitée aux modes de réalisation décrits et illustrés qui n'ont été donnés qu'à titre d'exemple.

## Revendications

1. Procédé de fixation d'un essieu de véhicule sur le soubassement (1) de la caisse de ce véhicule qui consiste, après avoir assemblé le soubassement (1),
a) à préparer un gabarit (11) comportant des pions de centrage (12) dont la position relative est identique à celle des emplacements de vis prévus sur l'essieu ;
b) à positionner des écrous (5) sur le soubassement (1) à l'aide du gabarit (11) ;
c) à fixer les écrous (5) aux emplacements déterminés à l'étape b), le gabarit (11) étant toujours en place ;
d) à retirer le gabarit (11) ; et
e) à positionner l'essieu sur le soubassement (1) pour le fixer ensuite à l'aide de vis.

2. Procédé selon la revendication 1, caractérisé en ce que l'étape c) est effectuée par soudage.

3. Procédé selon la revendication 1, caractérisé en ce que l'étape b) est effectuée en plaçant les écrous (5), qui comportent chacun une embase (8), sur les pions de centrage (12) du gabarit (11), puis en appliquant le gabarit (11) contre le soubassement (1) de manière que les écrous (5) passent au travers d'un élément de celui-ci et soient plaqués par leur embase (8) sur ledit soubassement.

4. Procédé selon la revendication 1, caractérisé en ce que l'étape b) est effectuée en mettant d'abord en place le gabarit (11) par rapport au soubassement (1), les pions (12) du gabarit pénétrant dans un orifice ménagé dans la tôle, et les écrous (5) étant ensuite positionnés à l'intérieur du soubassement (1) par les pions (12) du gabarit (11).

5. Procédé selon la revendication 2, 3 ou 4, caractérisé en ce que l'étape c) est effectuée en soudant les écrous (5) par leur embase (8) sur le soubassement (1).

6. Procédé selon la revendication 3, 4 ou 5, caractérisé en ce que le corps d'écrou présente une forme générale extérieure conique (13) s'évasant depuis le trou taraudé (6) de l'écrou vers un chambrage (7) qui le prolonge.

7. Procédé selon la revendication 1, caractérisé en ce que les écrous étant fixés, par exemple soudés, sur une tôle épaisse (17), l'étape b) est effectuée en introduisant les pions de centrage (12) du gabarit (11) dans les chambrages (7) des écrous (5) et l'étape c) est effectuée en fixant ladite tôle (17) sur le soubassement (1).

8. Procédé selon la revendication 7, caractérisé en ce que les écrous (5) présentent une forme cylindrique et sont fixés par leur partie formant chambrage (7) au droit d'un orifice (16) ménagé dans la tôle (17).

## Claims

1. Method of fastening of a vehicle axle onto an underframe (1) of the body of this vehicle, which consists after having assembled the underframe (1),
a) in preparing a jig (11) comprising centering pins (12) the relative position of which is identical with that of the screw locations provided on the axle;
b) in positioning nuts (5) onto the underframe (1) with the assistance of the jig (11);
c) in fastening the nuts (5) at the places determined in the step b), the jig (11) being still in place;
d) in withdrawing the jig (11) ; and
e) in positioning the axle onto the underframe (1) for then fastening it with the assistance of screws.

2. Method according to claim 1, characterized in that the step c) is carried out by welding.

3. Method according to claim 1, characterized in that the step b) is carried out by placing the nuts (5), which comprise each one a flange (8), onto the centering pins (12) of the jig (11) and then in applying the jig (11) onto the underframe (1) so that the nuts (5) pass through one element thereof and be pressed with their flange (8) onto the said underframe.

4. Method according to claim 1, characterized in that the step b) is carried out by putting at first the jig (11) in place with respect to the underframe (1), the pins (12) of the jig penetrating into an opening formed in the metal sheet and the nuts (5) being then positioned inside of the underframe (1) by the pins (12) of the jig (11).

5. Method according to claim 2,3 or 4 , characterized in that the step c) is carried out by welding the nuts (5) with their flange (8) onto the underframe (1).

6. Method according to claim 3,4 or 5, characterized in that the nut body exhibits a general outer conical shape (13) flaring from the tepped hole (6) of the nut towards a recess (7) which extends it.

7. Method according to claim 1, characterized in that with the nuts being fastened for example welded onto a thick metal sheet (17), the step b) is carried out by inserting the centering pins (12) of the jig (11) into the recesses (7) of the nuts (5) and the step c) is carried out by fastening the said metal sheet (17) onto the underframe (1).

8. Method according to claim 7, characterized in that the nuts (5) exhibit a cylindrical shape and are fastened with their recess-shaped portion (7) at an opening (16) formed in the metal sheet (17).

## Patentansprüche

1. Verfahren zur Befestigung einer Fahrzeugachse an dem Unterrahmen (1) des Kastens dieses Fahrzeuges, das nachdem der Unterrahmen (1) zusammengebaut worden ist, darin besteht,
a) eine Lehre (11) vorzubereiten, die Zentrierstifte (12) aufweist, deren relative Stellung mit derjenigen, der an der Achse vorgesehenen Schraubenstellen identisch ist;
b) Muttern (5) an dem Unterrahmen (1) mit Hilfe der Lehre (11) zu positionieren;
c) die Muttern (5) an den im Schritt b) bestimmten Stellen zu befestigen, wobei die Lehre (11) stets am Platz ist;
d) die Lehre (11) abzunehmen ; und
e) die Achse an dem Unterrahmen (1) zu positionieren, um sie sodann mit Hilfe von Schrauben zu befestigen.

2. Verfahren nach Anspruch 1, dadurch gekennzeichnet, dass der Schritt c) durch Schweissen durchgeführt wird.

3. Verfahren nach Anspruch 1, dadurch gekennzeichnet, dass der Schritt b) durchgeführt wird, indem man die Muttern (5), die jeweils einen Flansch (8) aufweisen, auf die Zentrierstifte (12) der Lehre (11) legt und dann die Lehre (11) an den Unterrahmen (1) derart anlegt, dass die Muttern (5) ein Element desselben durchsetzen und mit ihrem Flansch (8) an dem besagten Unterrahmen angedrückt werden.

4. Verfahren nach Anspruch 1, dadurch gekennzeichnet, dass der Schritt b) durchgeführt wird, indem man zuerst die Lehre (11) in bezug auf den Unterrahmen (1) in Stellung bringt, wobei die Stifte (12) der Lehre in eine in dem Blech gebildete Öffnung eindringen und die Muttern (5) sodann innerhalb des Unterrahmens (1) durch die Stifte (12) der Lehre (11) positioniert werden.

5. Verfahren nach Anspruch 2, 3 oder 4, dadurch gekennzeichnet, dass der Schritt c) durchgeführt wird, indem man die Muttern (5) mit ihren Flanschen (8) an dem Unterrahmen (1) anschweisst.

6. Verfahren nach Anspruch 3, 4 oder 5, dadurch gekennzeichnet, dass der Mutterkörper eine allgemeine äussere kegelförmige Gestalt (13) aufweist, die sich von dem Loch mit eingeschnittenem Innengewinde (6) der Mutter zu einer Ansenkung (7) hin, die es fortsetzt, erweitert.

7. Verfahren nach Anspruch 1, dadurch gekennzeichnet, dass bei an einem dicken Blech (17) befestigten, z.B. angeschweissten Muttern, der Schritt b) durchgeführt wird, indem man die Zentrierstifte (12) der Lehre (11) in die Ansenkungen (7) der Muttern (5) einführt und der Schritt c) durchgeführt wird, indem man das besagte Blech (17) an dem Unterrahmen (1) befestigt.

8. Verfahren nach Anspruch 7, dadurch gekennzeichnet, dass die Muttern (5) eine zylinderförmige Gestalt aufweisen und mit ihrem Ansenkungsteil (7) an einer in dem Blech (17) gebildeten Öffnung (16) befestigt werden.
